Europäisches Patentamt

(19) European Patent Office

Office européen des brevets

(11) Publication number: **0 364 025 B1**

# EUROPEAN PATENT SPECIFICATION

(12)

(45) Date of publication of patent specification :
**21.08.91 Bulletin 91/34**

(51) Int. Cl.⁵ : **B01J 20/24, B01D 11/02**

(21) Application number : **89202477.9**

(22) Date of filing : **02.10.89**

(54) Process for extracting essentially aliphatic, low-molecular-weight fractions from regenerated humic acids from coal.

(30) Priority : **14.10.88 IT 2229488**

(43) Date of publication of application :
**18.04.90 Bulletin 90/16**

(45) Publication of the grant of the patent :
**21.08.91 Bulletin 91/34**

(84) Designated Contracting States :
**AT BE CH DE ES FR GB GR LI LU NL SE**

(56) References cited :
**EP-A- 0 272 737**
**US-A- 4 569 799**

(73) Proprietor : **ENIRICERCHE S.p.A.**
**Corso Venezia 16**
**I-20121 Milan (IT)**

(72) Inventor : **Calemma, Vincenzo**
**Via Kennedy 34**
**I-20097 San Donato Milanese Milan (IT)**
Inventor : **Rausa, Riccardo**
**Via Pace 7**
**I-20097 San Donato Milanese Milan (IT)**
Inventor : **Cimino, Roberto**
**Via Desenzano 10**
**I-20146 Milan (IT)**

(74) Representative : **Roggero, Sergio et al**
**Ing. Barzanò & Zanardo Milano S.p.A. Via**
**Borgonuovo 10**
**I-20121 Milano (IT)**

EP 0 364 025 B1

## Description

The present invention relates to a process for extracting essentially aliphatic, low molecular-weight-fractions from humic acids from coal, characterized in that said process is carried out with methanol under supercritic conditions.

Regenerated humic acids from coal can be prepared by means of the oxidation of coal.

In European patent application 0272732, to the same Applicant's name, said oxidation is carried out in dry phase with oxygen or mixtures of oxygen and nitrogen inside a fluidized-bed reactor using a coal having a granulometry comprised within the range of from 100 μm to 3 mm, and operating at a temperature comprised within the range of from 150 to 300°C, and under a partial pressure of oxygen comprised within the range of from 1.1 abs. atm up to 10 abs. atm and for a contact time comprised within the range of from 30 up to 600 minutes.

From the regenerated humic acids from coal, extracting essentially aliphatic, low-molecular-weight fractions may prove useful.

The present Applicant has found now a process for extracting said particular fractions by taking advantage of the characteristics of methanol under supercritic conditions.

Methanol, contrarily to what happens in case of supercritic water, does not cause any modifications either in the substrate (humic acids), or on the products formed by the extraction.

Although the extracts deriving from humic acids have -- as compared to the humic acids used as the starting products -- a high H/C ratio, they show a high content of oxygen, which is contained in carboxy groups and ester groups.

The process for extracting essentially aliphatic, low-molecular-weight fractions from regenerated humic acids from coal, according to the present invention is characterized in that it is carried out with methanol at a temperature higher than critic temperature, and under pressures higher than 70 bar.

Said process is preferably carried out at temperatures at least 30°C higher than methanol critic temperature, and under pressures equal to, or higher than, the critic pressure, and lower to, or equal to, 150 bar.

Some examples are now given in order to better explain the invention without limiting it.

### Examples 1-3

The humic acids used as the starting materials were obtained by oxidating a sub-bituminous coal (Montana Rosebud) with air at 200°C for 3 hours under a relative pressure of 9.117 bar (9 atm).

The equipment used for extracting the essentially aliphatic, low-molecular-weight fractions is composed by :

— a syringe pump ;
— a chromatographic column arranged inside a gas-chromatographic oven ;
— a pressure-reducer capillary ;
— an unit for collecting the fractions ; and
— a lamination valve situated upstream said fraction collecting unit.

In order to enable the pump to operate, which, in order to start operating, has to be primed with a certain pressure at the delivery side, the column which contained the substrate was initially filled with liquid methanol.

Under these conditions, the heating is started and the first samples obtained are those which are extracted, sequentially over time, during the step of increase of temperature up to the desired value.

The extracts, obtained in alcoholic solution, were submitted, after solvent evaporation, to elemental and I.R. analysis. The spectra were obtained by means of a Perkin-Elmer 298 dispersive instrument. The products fully soluble in THF (tetrahydrofuran) were analysed in film form ; on the contrary, the products insoluble in said solvent, as well as the residue were dispersed in KBr (1 mg/300 mg of KBr), and analysed as tablets.

In Table 1 the elemental composition, the minimal formulae calculated from it and the various atomic ratios, as well as the analytical characteristics of the humic acids used as the starting materials are reported together with the conditions under which the extracts were obtained.

In Figure 1 the I.R. spectra are reported (the wave number is expressed as cm¹ on the abscissa, and the transmittance is expressed as a percent value on the ordinate), respectively of the humic acids used as the substrate on which the extraction was carried out (A), and of the residue (B) obtained from said humic acids.

In Figure 2, the I.R. spectra are respectively reported of Extract 1, Extract 2 and Extract 3.

In Figure 3, a magnified view is reported of the aliphatic region of the spectrum of the extracts obtained from humic acids at 350°C (Extract 3).

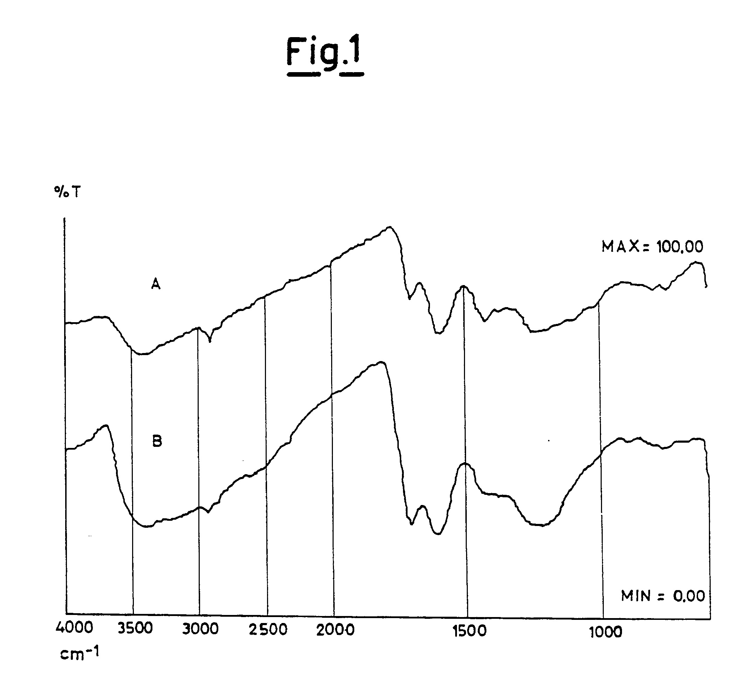

As one can see from Figure 1, the residue is, among all of the products, the one which is the least different from the extraction substrate as for elemental composition and I.R. spectrum. However, said residue, although

2

displays a comparable value of H/C ratio, is different from humic acids due to a lower content of oxygen, which, as the spectrum of Figure 1 demonstrates, is due to the extraction of acidic functionalities from said humic acids.

The region comprised within the range of from 1800 to 1600 cm$^{-1}$ appears in fact – as compared to the same region of the parent substrate -- to be more resolved and with a lower value of the ratio of the intensity of the carbonyl band (at about 1700 cm$^{-1}$) to the intensity of the aromatic band (at about 1600 cm$^{-1}$).

On the contrary, the differences relating to the extraction products are much more marked. As the elemental analyses and the minimal formulae calculated from them demonstrate, such products have a high H/C ratio (about twice as high as of humic acids) and a content of oxygen which, while is similar to the oxygen content of humic acids in case of the first extracts, decreases as extraction proceeds.

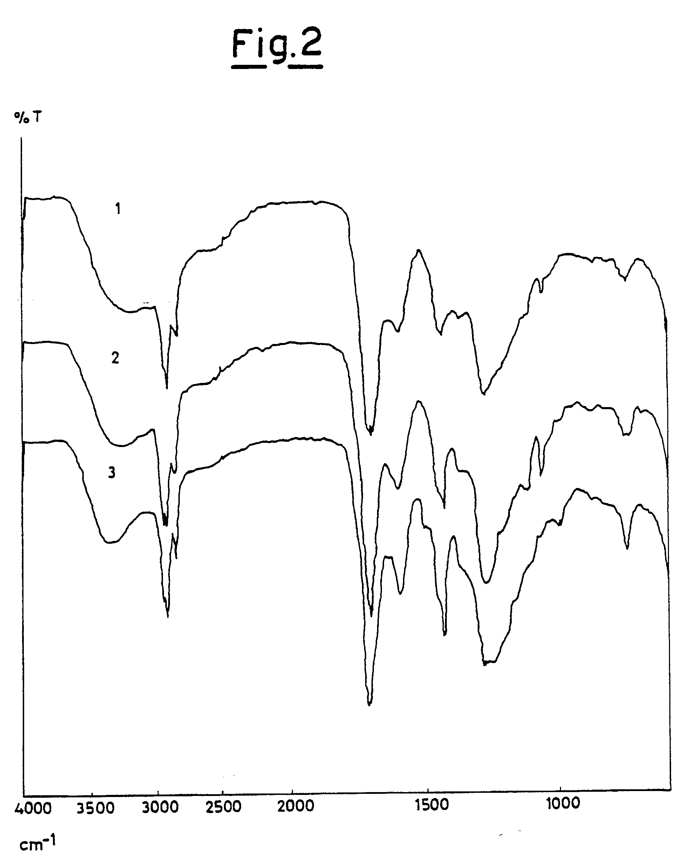

The spectra of such extracts, reported in Figure 2, show the presence of strong aliphatic (2990-2880 ; 1450-1370 cm$^{-1}$), carbonylic (1700-1720 cm$^{-1}$), aromatic (1598 ; 745-828 cm$^{-1}$) and hydroxy bands (3300 ; 1275-1005 cm$^{-1}$).

The high content of oxygen is therefore mainly contained in carboxy and ester functionalities. This is particularly evident from the fact that the carbonylic band, which is present in the spectra of the products obtained at the beginning of the extraction as a very wide band centered around the wave number of 1702 cm$^{-1}$ (COOH), and is accompanied by the absorptions at 3300 cm$^{-1}$ and by the band at 1200 cm$^{-1}$, progressively shifts towards higher frequencies (1720 cm$^{-1}$ ; COOCH$_3$). This shift is followed by a similar shift of the bands at 3300 and 1220 cm$^{-1}$, in which also a decrease in intensity is observed.

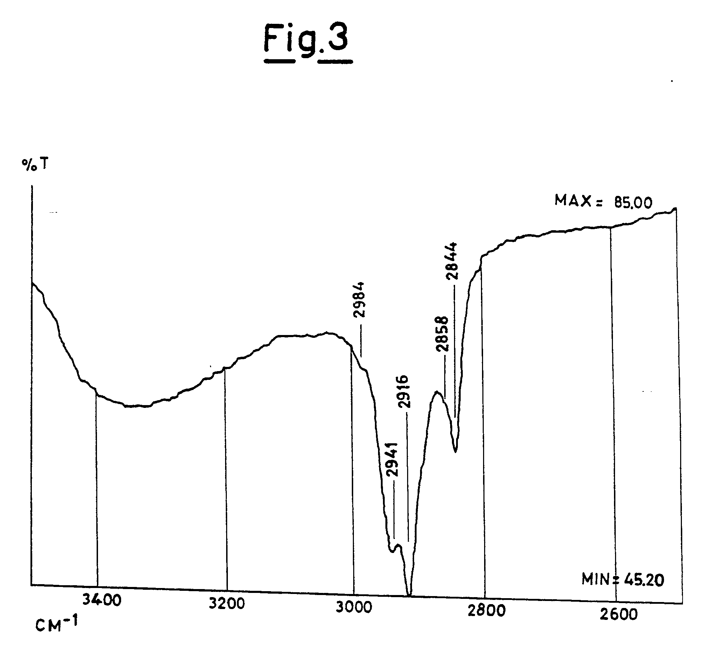

Also the aliphatic region shows some characteristics which are typical for ester methoxy groups ; as the magnification of one of such regions (Figure 3) demonstrates, beside the absorptions by CH$_2$ groups, bands are present at 2984, 2941 and 2858 cm$^{-1}$, which are typical of methoxy moieties of COOCH$_3$ groups. Such bands are accompanied by a very meaningful bending band, at 1430 cm$^{-1}$, due to the symmetrical deformation of O=C-O-CH$_3$ bonds. This absorption increases with increasing temperature and extraction time, and consequently from Sample No. 1 up to Sample No. 3.

As extraction proceeds, the extracts get more and more enriched with carbon, lose oxygen, acquire a greater and greater aromatic character (their H/C ratio decreases). The aromatic structures, as demonstrated by the shift of the bands of aromatic substitution from about 750 up to 860 cm$^{-1}$, show an increasing degree of substitution, or turn into polyaromatic structures.

The extraction of said fractions can be ascribed to the solvent, which does not make it possible the thermal decarboylation of carboxy groups contained in the extraction substrate to take place, and indirectly favours the solubility of some of its fractions.

## T a b l e 1

Analytical characteristics of the substrates submitted to supercritic extraction
and of the obtained products

| Sample | Amount, grams | Ashes | Water | C % | H % | N % | S % | O % | H/C | O/C |
|---|---|---|---|---|---|---|---|---|---|---|
| Coal, Montana Rosebud grade | -- | 16.5 | -- | 62.0 | 4.5 | 1.0 | 0.6 | 15.4 | 0.87 | 0.19 |
| Humic acids | -- | 0.2 | -- | 65.2 | 3.6 | 1.3 | 0.4 | 29.3 | 0.66 | 0.34 |
| Extraction residue | -- | 3.0 | 2.5 | 68.6 | 3.7 | 1.3 | n.d. | 23.4* | 0.65 | 0.26 |
| Extract 1 | 0.156 | -- | -- | 62.3 | 6.9 | 0.8 | n.d. | 30.0* | 1.32 | 0.36 |
| Extract 2 | 0.075 | -- | -- | 66.3 | 6.9 | 0.9 | n.d. | 26.0* | 1.24 | 0.29 |
| Extract 3 | 0.051 | -- | -- | 67.8 | 6.9 | 0.5 | n.d. | 24.8* | 1.22 | 0.27 |

* Calculated by difference, and including sulfur content

Extraction conditions, and minimal formulae of substrates and extracts

| Extract No. | Pressure (atm) | Temperature (°C) | Minimal formula |
|---|---|---|---|
| 1 | 90 | 270 | $C_{51.9}H_{68.6}N_{0.6}O_{18.8}$ |
| 2 | 90 | 270 | $C_{55.2}H_{68.5}N_{0.6}O_{16.3}$ |
| 3 | 90 | 350 | $C_{56.5}H_{68.9}N_{0.3}O_{15.5}$ |
| Residue | 90 | 350 | $C_{57.2}H_{37.0}N_{0.9}O_{14.6}$ |
| Humic acids | | | $C_{54.5}H_{36.1}N_{0.9}S_{0.1}O_{18.3}$ |

EP 0 364 025 B1

EP 0 364 025 B1

## Claims

1. Process for extracting essentially aliphatic, low-molecular-weight fractions from regenerated humic acids from coal characterized in that said process is carried out with methanol at temperatures higher than methanol critic temperature, and under pressures higher than 70 bar.

2. Process according to claim 1, wherein the temperature is at least 30°C higher than the critic temperature.

3. Process according to claim 1, wherein the pressure is equal to, or higher than, the critic pressure, and is lower to, or equal to, 150 bar.

## Patentansprüche

1. Verfahren zum Extrahieren von im wesentlichen aliphatischen, niedermolekularen Fraktionen von aus Kohle gewonnenen regenerierten Huminsäuren, dadurch gekennzeichnet, daß das Verfahren mit Methanol bei Temperaturen, die höher liegen als die kritische Temperatur für Methanol, und unter Drücken von über 70 bar ausgeführt wird.

2. Verfahren nach Anspruch 1, worin die Temperatur um wenigstens 30°C höher liegt als die kritische Temperatur.

3. Verfahren nach Anspruch 1, worin der Druck dem kritischen Druck entspricht oder höher als dieser liegt und unter oder gleich 150 bar beträgt.

## Revendications

1. Procédé pour extraire des fractions essentiellement aliphatiques, de faible masse moléculaire, d'acides humiques régénérés obtenus à partir de charbon, caractérisé en ce qu'il est effectué avec du méthanol à une température supérieure à la température critique du méthanol, et sous une pression supérieure à 70 bars.

2. Procédé selon la revendication 1, dans lequel la température est au moins de 30°C supérieure à la température critique.

3. Procédé selon la revendication 1, dans lequel la pression est égale ou supérieure à la pression critique et est inférieure ou égale à 150 bars.

# Fig.1

# Fig.2

# Fig.3